Europäisches Patentamt

European Patent Office

Office européen des brevets

(11) Publication number: **0 420 333 A1**

# EUROPEAN PATENT APPLICATION

(21) Application number: 90202512.1

(22) Date of filing: 24.09.90

(51) Int. Cl.⁵: **B60C 9/00**, B60C 9/20

(30) Priority: 27.09.89 NL 8902399

(43) Date of publication of application:
03.04.91 Bulletin 91/14

(84) Designated Contracting States:
DE ES FR GB IT LU NL

(71) Applicant: AKZO N.V.
Velperweg 76
NL-6824 BM Arnhem(NL)

(72) Inventor: Remijn, Mattheus Gerardus
Plevierstraat 19
NL-6883 CG Velp(NL)
Inventor: Stuut, Harmannus Aaldrik Maria
Broerenstraat 22-111
NL-6811 EB Arnhem(NL)
Inventor: Claassen, Martinus Johannes Maria
Hoensbroekstraat 110
NL-6845 DP Arnhem(NL)

(74) Representative: Schalkwijk, Pieter Cornelis et
al
AKZO N.V., Patent Department (Dept. CO),
P.O. Box 9300
NL-6800 SB Arnhem(NL)

(54) Reinforcing member for a pneumatic radial-ply tyre, a radial-ply tyre and a method of manufacturing the reinforcing member.

(57) Reinforcing (1) member for a pneumatic radial ply tyre, which member contains a bundle of continuous filaments of polyparaphenylene terephthalamide (2) in a matrix of a cured epoxy compound. The linear density of the non-impregnated bundle of filaments is 300-2000 decitex. The reinforcing member has an apparent bending stiffness of 1-25 PSN and its deformability is 2-10%. The reinforcing members may be used in the radial ply tyre in the, optionally folded over, belt and/or in the carcass.

fig. 2

# REINFORCING MEMBER FOR A PNEUMATIC RADIAL-PLY TYRE, A RADIAL-PLY TYRE, AND A METHOD OF MANUFACTURING THE REINFORCING MEMBER

The invention relates to a reinforcing member for a pneumatic radial-ply tyre, which member contains a filaments bundle composed of continuous filaments of polyparaphenylene terephthalamide (PPDT) and impregnated with a synthetic material substantially made up of a cured epoxy compound in an amount of at least 15 wt.%, calculated on the weight of the non-impregnated material.

Such a reinforcing member for the belt of a car radial-ply tyre is known from Japanese Patent Application No. Sho 63-134310 published on 6 June, 1988. It is well known that nowadays passenger cars are mainly fitted with radial-ply tyres which, in principle, are usually built up from an elastomeric matrix with a carcass having reinforcing cords, say of rayon, disposed in radial planes, the carcass being provided with bead wires on the edges that are in contact with the rim, and belt strips, often reinforced with steel cord, being provided beneath the tread of the tyre and around the carcass. Prime functions of the wheel/tyre combination in a vehicle are to carry the load and provide directional stability. In a radial-ply tyre these are the functions of the carcass and the belt, respectively. The tyre property quantifying the steering capacity is called the steering stability. Said property is a direct result of the stiffness of the belt as it bends in its plane. Hence the belt strips are an extremely important element in the construction of radial-ply tyres. Although in actual practice satisfactory results are obtained using radial-ply tyres having belt strips reinforced with steel cord, there is room for improvement all the same. Particularly, there is a drawback to steel cord on account of the chance of corrosion and the relatively high weight of steel, resulting in heavy dynamic loads. In said Japanese patent publication it is proposed that the conventional steel cord in the belt strips be replaced with the reinforcing members mentioned in the opening paragraph. The known reinforcing member in the sole example is built up from an untwisted bundle of an unknown number of filaments of PPDT, which bundle has an overall titre of 3000 Denier (3333 decitex) and is impregnated with 35 wt.%, calculated on the weight of the filaments bundle, of a cured epoxy compound. In Japanese Patent Publication No. 63-134310 it is noted that the overall titre of the filaments bundle should not exceed 10 000 Denier (11 111 decitex). While it may be possible under certain conditions to obtain reasonable results using these known reinforcing members, it has been found that they are less suitable for use in the belt strips of radial-ply tyres for passenger cars. In particular, the known reinforcing members with a filaments bundle having an overall titre or linear density of 3333 decitex and higher will have a too great apparent bending modulus of about 70 PSN and higher. As a result there may be so much shear stress when load is put on the car tyre, and hence so much deformation of the rubber positioned in the tyre between the reinforcing members, that cracks will form in the rubber, which has a negative effect on the tyre's life span. Another drawback to a car tyre having these too stiff known reinforcing members is that irregularities in the road surface will not be passed on sufficiently smoothly, thus reducing in particular the tyre's riding comfort.

Another reinforcing member for the belt of a car radial-ply tyre is known from Japanese Patent Application Publication No. Sho 63-151505 published on June 24, 1988. Said known reinforcing member is built up from an untwisted bundle of filaments of, say, PPDT, which bundle is impregnated with at least 15 wt.%, calculated on the weight of the filaments bundle, of a thermoplastic polymer. In the case of several important thermoplastic polymers, such as nylon-6 used in combination with PPDT filaments in Example 1 of Japanese Patent Publication 63-151505, the result may be a tyre which has the problem of flat spotting. Said problem occurs in thermoplastic polymers when during driving the temperature of the tyre rises to above the glass transition temperature (Tg) of the synthetic material, and there is subsequent cooling down to ambient temperature in the deformed state when the car is at a standstill. Another drawback to using a thermoplastic polymer is that because of the high-molecular weight composition and the relatively high viscosity only inferior impregnation of the filaments bundle is attainable. Further, in the known reinforcing member the adhesion effected between the filaments of the bundle and the polymer matrix is inferior. Given the heavy dynamic loads that occur in a car tyre, insufficient adhesion and impregnation may cause the reinforcing members to start fibrillating in several places, with the filaments becoming detached from the thermoplastic polymer matrix. Such damaged reinforcing members have lost the capacity to properly fullfil their function in the tyre and so initiate its total degradation. Further, it has been found that the apparent bending modulus (to be defined more closely hereinafter) of the reinforcing member described in Example 1 of the aforementioned Japanese Patent Publication, which consists of PPDT filaments in a nylon-6 matrix, is far too high, namely about 70 PSN, which gives a tyre of insufficient riding comfort.

Furthermore, attention is drawn to the following prior art publications.

US 4 320 791 describes a pneumatic tyre with special bead-reinforcing elements of high rigidity. The reinforcing elements are composed of high-modulus non-metal fibres, such as aramid, polyester, carbon, glass, that have been impregnated with a matrix-forming synthetic material, such as polyether polyurethane, polyester polyurethane, epoxy resin, etc, and rubber-based materials.

US 4 754 794 describes a pneumatic tyre which has in it special reinforcing assemblies of metal threads such as steel, or non-metal fibres such as glass or aromatic polyamide, which threads or fibres are coated with two different matrix materials made up of either thermoplastic materials or of thermosetting ones such as epoxy resin. The specification mentions the possibility of applying the reinforcing members in pneumatic tyres as cables in the bead and in a belt strip. In that case the bundles of threads or fibres are first sheathed with a first matrix material and then twisted together using a second matrix material. Consequently, these known reinforcing members are of a different type and will have a too high bending stiffness to be used in the belt or the carcass.

EP-B1 0 107 887 describes a multifilament yarn of PPDT generally intended for the reinforcement of rubber and the like, on which is provided 0,01-5% by weight of epoxy resin. The bending stiffness of this known product is deemed to be insufficient for use in the belt of a tyre.

US 3 556 922 describes an elongated composite product comprised of 10-50% by volume of a matrix of thermoplastic or thermosetting polymer, e.g. epoxy resin, with in it reinforcing fibres substantially composed of aromatic polyamide, supplemented with 2-12% by volume of inorganic fibres in the compression zone. Already on the basis of the generally asymmetrical cross-section such a product will not be suitable for the reinforcement of pneumatic tyres.

In US 3 869 430 high-modulus fibres of PPDT are described. Also, said publication describes in general composites which may comprise an epoxy resin matrix reinforced with unidirectional PPDT fibres.

EP-A2 0 170 499 describes rigid reinforcing bars, particularly for reinforced concrete, which are composed of reinforcing fibres, such as glass, carbon, aromatic polyamide, and the like, impregnated with a thermosetting resin such as epoxy resin.

In US 4 250 702 is described a flexible thread consisting of a bundle of filaments of polyester, polyamide, polyacrylonitrile, aramid, and/or glass twisted together to form said thread, which bundle is impregnated with a special mixture of epoxy resins. The known threads are used to manufacture drying meshes for papermaking machines.

FR 2 576 044 describes a process for surface treating PPDT or some other aramid fibres by applying first 0,01-0,5 wt.% of an epoxy compound and then a resorcinol formaldehyde-based adhesive to the individual fibres, after which a heat treatment is carried out at a temperature not lower than 200° C.

FR 2 590 207 describes a radial-ply tyre which has a carcass containing cords of PPDT fibres or fibres of some other aramid, the elongation of the used fibres having to be within certain special limits.

In EP-0 270 478 $A_2$ is described a car tyre belt strip folded over in a special manner. The cords from which the belt strip is built up may be of various high modulus materials, such as steel, glass, or aromatic polyamide.

In the journal Chemiefasern/Textil-Industrie, Vol. 24, No. 2, February 1974 (Frankfurt, FRG), it is stated on p. 100 in the paragraph dealing with adhesion that for the adhesion of tyre cord of conventional PPDT yarns (Kevlar®) use is made of a system based on epoxy resin and resorcinal formaldehyde (RFL), which is then applied in a conventional manner to the outer surface of the cord only. Mention is made of the use of such cords in the belt.

Further reference is made to p. 32, item 4 of the journal Gummi, Asbest, Kunststoffe, Vol. 29, No. 1, January 1976 (Stuttgart, FRG). In this article it is noted that the use of conventional PPDT fibres (Kevlar®) generally as a reinforcing material for the belt of passenger car tyres is considered to be highly promising. It is also stated in this publication that conventional PPDT fibres generally are being tested for use in truck tyres as a replacement for the single-ply carcass of steel cord.

EP-$A_2$-0 101 400 describes a radial-ply tyre with a type of belt consisting of a number of "board-shaped" strips extending in circumferential direction of the tyre. Said strips may be composed of a composite material in the form of a matrix of epoxy resin reinforced with fibres of glass, aramid, carbon, or steel.

In DE-PA 1 480 965 reinforcing tapes for car tyres are described. Several of these tapes are positioned side by side between the tread and the carcass and extend all round the tyre. Each tape consists of a number of parallel continuous textile fibres, with the interstices being filled in with an adhesive or impregnating agent that keeps the fibres together. The width of the tapes is 1-12 mm at a thickness of 0,3-3 mm.

The invention has for its object to provide a reinforcing member of the type mentioned in the opening paragraph, in which said drawbacks have been overcome. The reinforcing element according to the invention is characterized in the first place in that the linear density of the filaments bundle is 300 to 2000, preferably 300 or 350 to 1400 or 1800 decitex, calculated on the non-impregnated material, the reinforcing member has an apparent bending modulus (defined in the description on the basis of ASTM-D747-86) of 1-25 PSN, the deformability F of the reinforcing member (defined in the description using the cylinder test) is 2-10%, preferably 4-10%, the synthetic material is substantially composed of a cured epoxy compound, and the amount of synthetic material is 20-50 wt.%, preferably 36-45 wt.%, and more particularly about 40 wt.%, calculated on the weight of the non-impregnated filament material.

What is meant by stating that said amount of synthetic material amounts to, say, 40 wt.% is that bound to 100 parts by weight of the non-impregnated filaments bundle there are 40 parts by weight of synthetic material.

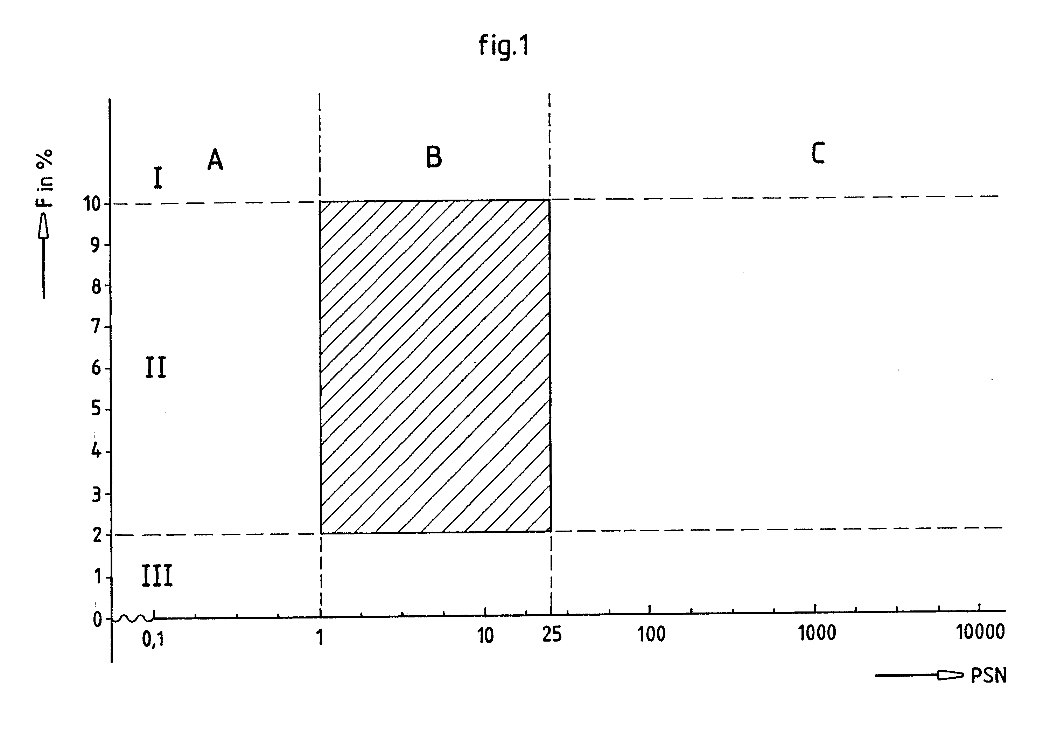

By way of illustration the apparent bending modulus and the deformability F have been plotted along the axes of the graph in Fig. 1. The deformability F, which will be defined more closely below, is given in per cents and the apparent bending modulus, also to be defined below, is expressed in PSN, an abbreviation of pendulum stiffness number. According to the invention the reinforcing members according to the invention has a bending stiffness of 1-25 PSN and a deformability of 2-10%. This means that in Fig. 1 the bending modulus values and the deformability values of the reinforcing member according to the invention are in the shaded section. The reinforcing member according to the invention is advantageously characterized in that said filaments bundle contains at most 1000 PPDT filaments. Since according to the invention the PPDT filaments bundle is impregnated with a substance based on said epoxy compound, i.e. a non-thermoplastic polymer, the aforementioned flat spotting does not occur. The uncured thin liquid impregnating agent is made up of a low-viscous mixture of a low-molecular weight resin and a low-molecular weight curing agent. This allows for highly favourable distribution of the liquid mixture between the filaments of the bundle during impregnation. Further, interaction is generated between the impregnating agent and the surface area of the PPDT filaments. Consequently, after curing the especially homogeneous reinforcing element according to the invention is obtained, with very satisfactory and homogeneous adhering together of the filaments bundle and the epoxy resin-based matrix. When this reinforcing member is used in a tyre belt, there will be no fibrillating and the bending stiffness is within the limits desired for riding comfort.

An especially favourable embodiment of the reinforcing member is characterized according to the invention in that it is provided with an adhesive known in itself to promote adhesion to the elastomeric matrix of the pneumatic tyre, for instance an adhesive based on resorcinol-formaldehyde-latex.

Although it was proposed in the literature to use conventional PPDT yarns and cords for the reinforcement of car tyres as early as 1974, the application has not been put to any wide-scale use in actual practice as yet. Surprisingly, it has been found according to the invention that using special reinforcing members each having a PPDT filaments bundle with the aforementioned low titre or linear density of 300-2000 decitex will provide the properties desired for reinforcing radial-ply tyre belt strips and/or their carcass. Only the special reinforcing members according to the invention are expected to render the wide-scale use of PPDT yarn in car tyres feasible in actual practice.

The reinforcing member according to the invention also is advantageously characterized in that the modulus of elasticity of the synthetic material based on a cured epoxy compound is at least 1 GPa, preferably 1-10 GPa, and its elongation at break is greater than 2%, preferably greater than 4%, and at most 10%, while the glass transition temperature $T_g$ of the reinforcing member is higher than 120° C.

The reinforcing member according to the invention is further characterized in that the filaments bundle in itself has a tensile strength of 2-4 GPa, a modulus of elasticity of 50-150 GPa, and an elongation at break of 1-6%. The preferred embodiment is characterized according to the invention in that the filaments bundle in the reinforcing member is untwisted and the filaments extend substantially linearly and mutually parallel.

The invention further comprises a radial-ply tyre with at least one belt strip containing reinforcing members, which reinforcing members each contain a bundle of continuous PPDT filaments, the bundles being impregnated with a synthetic material substantially composed of a cured epoxy compound in an amount of at least 15 wt.%, calculated on the weight of the non-impregnated material, with the tyre characterized in that the reinforcing members are of the type where the titre or linear density of the filaments bundle is 300-2000 or 350-2000 decitex, preferably 300-1400 decitex, calculated on the non-impregnated material, the amount of synthetic material is 20-50 wt.%, preferably 36-45 wt.%, calculated on the weight of the non-impregnated material, with the filaments bundle in every reinforcing member containing at most 1000 filaments, but preferably 100-800 filaments, the apparent bending modulus of the reinforcing members is 1-25 PSN and their deformability F 2-10%, preferably 4-10%. It is preferred that in the radial-ply tyre according to the invention the belt strip be reinforced with the reinforcing members according to the invention in the form of cords, each cord being made up of two or more of said reinforcing members.

For practical reasons the belt strip will generally be incorporated into the elastomeric matrix of the tyre in the form of a fabric, with the reinforcing members according to the invention forming the warp. The weft threads in this case serve to maintain the desired mutual distance between the warp threads and link them up into a cohesive whole.

In addition, the invention comprises a radial-ply tyre which is characterized by a belt strip folded over along its two longitudinal edges. Surprisingly, it has been found that a belt strip made up of the reinforcing members according to the invention is particularly easy to fold over along its edges, which is most advantageous in the construction and manufacture of the tyre.

Up to now conventional radial-ply tyres of speed categories S and T for passenger cars have generally contained two steel cord-reinforced belt strips or working layers. The first or inner belt strip is adjacent to the carcass and the second or outer one is adjacent to the tread. In each belt strip the cord direction is at an angle of about 16-26° to the tyre's direction of running, the cords in the first belt strip intersecting those in the second one. The weak point of the known belt strips of steel cord is their edge. Each deformation of the belt, whether it is flattening as a result of contact with the road surface or bending in its own plane during cornering, will give a change in the shear deformation of the rubber between the belt plies. This periodic shear deformation causes the rubber between the belt strips to tear at the belt edge, a phenomenon which is known as Belt Edge Separation (BES). The steering stability of the belt decreases as this process advances. So, to reduce the BES problem several tyre manufacturers use one or more supporting plies of nylon-66 cord in the belt in addition to the two belt strips or working layers of steel cord. A frequently used type of supporting ply is the so-called cap ply, in which the nylon-66 reinforcing cords extend parallel to the direction of running of the tyre and which is positioned between the tread and the outer belt strip of steel cord. Some tyre manufacturers opt for a different solution to reduce the BES problem, using a supporting ply in the form of a sort of envelope, with the two belt strips of steel cord arranged in that envelope. This envelope-shaped supporting ply of nylon-66 cords is folded around the two belt strips of steel cord in such a way that the opening is on the side of the tread. The magnitude of the cord angle in the envelope in the position between the carcass and the first or inner belt strip of steel cord is about equal to that in the inner belt strip. Using said different types of supporting plies in the known tyres complicates the design of the tyre, increases the risk of rejects during tyre production, and in addition to the particularly disadvantageous increase in weight there are undesired side effects, such as the aforementioned flat spot tendency of the tyre being intensified.

As was stated earlier, it has surprisingly been found that the longitudinal edges of a belt strip composed of the reinforcing members according to the invention can be folded into a sort of envelope without any problem, whereas for a belt strip reinforced with steel cord this is only possible when use is made of special, very expensive steel cord having a very short traverse, the so-called high elongation steel cord. Because of the compression stiffness of the reinforcing member according to the invention or the cord manufactured therefrom one such envelope according to the invention will, in principle, give sufficient steering stability by itself to be used in a radial-ply tyre as sole belt strip without supporting plies. The risk of Belt Edge Separation is fully removed in this way by the cohesion at the belt edges.

So far, in the belt of well-known high-speed radial-ply tyres for passenger cars, i.e., H-, V-, or Z-tyres, use has commonly been made of four rubberized cord layers, viz. two flat belt strips or working layers containing steel cord and two supporting plies containing nylon-66 cord. In the radial-ply tyre according to the invention it is possible, in principle, to replace these four layers with a single envelope, i.e. belt strip with folded over longitudinal edges, consisting of a rubberized ply of said reinforcing members according to the invention.

The radial-ply tyre according to the invention which has in its belt only one belt strip with folded over edges and is reinforced with the reinforcing members according to the invention is attended with significant weight savings, viz.
- replacing steel cord with the reinforcing members according to the invention at equal ply strength will give a weight saving of about 80%,
- leaving out the supporting layers in the form of cap plies with accompanying rubber
- adjustment of the design strength to the reduced need due to decreasing centrifugal force.
A direct result of the radial-ply tyre according to the invention's weight saving is a reduction of the mechanical-dynamic losses. Also, the radial-ply tyre according to the invention with its simple envelope-belt concept, without supporting layers or any other plies, will generate significantly lower shear deformations, which, in its turn, will give reduced mechanical-dynamic losses. Not only does reducing the mechanical-dynamic losses result in a reduction of the rolling resistance, it also lowers the tyre's operating temperature. Said lowering of the temperature may manifest itself in a longer tyre life span. Alternatively, the effect may be exploited to design lighter tyres.

Further, the invention comprises a radial-ply tyre characterized according to the invention in that the carcass, which is preferably made up of a single layer, is substantially composed of said reinforcing members, which members each contain a bundle of continuous PPDT filaments, the bundles being impregnated with a synthetic material substantially made up of a cured epoxy compound in an amount of 20-50 wt.%, preferably 36-45 wt.%, calculated on the weight of the non-impregnated material, and the reinforcing members are of the type where the linear density of the filaments bundle is 300-2000 decitex, calculated on the weight of the non-impregnated material, with each filaments bundle containing at most 1000 filaments, the apparent bending modulus of the reinforcing members is 1-25 PSN and their deformability F 2-10%, preferably 4-10%.

In principle, according to the invention the reinforcing members used in the carcass of radial-ply tyres for passenger cars are provided singly, i.e. not in the form of a cord. According to the invention the reinforcing members used in the carcass of radial-ply tyres for trucks are preferably provided in the form of a cord, each cord being made up of two or more of said reinforcing members. The radial-ply tyre with said carcass according to the invention containing only one reinforcing layer is, in principle, particularly advantageous for use in heavier types of passenger car tyres and light truck tyres, i.e. for tyres having a bearing capacity of 600 kgf to 1400-1500 kgf per tyre. All this means significant savings as compared with conventional tyres of that type, in which, generally, use is made of a carcass composed of two layers made up of cords of synthetic or man-made fibres, or of a single-ply carcass of the much heavier steel cord.

The invention further comprises a process for manufacturing said reinforcing member, which is characterized in that in a continuous process a PPDT filaments bundle is moved along at a rate of at least 80 m/min, preferably of 80-500 m/min, with the bundle being impregnated with the desired amount of a liquid mixture of an epoxy resin and a curing agent in a first step, the impregnated bundle being shaped as desired in a second step, the mixture being cured in a third step, and a lubricant, more particularly an appropriate water-based lubricant for the adhesive to be applied later on, being applied to the member in the fourth step. Employing said separate process steps in a continuous process makes it possible to realise a high rate of production combined with high quality for the reinforcing member produced. Using a lubricant makes the reinforcing member according to the invention especially easy to process, while using a water-based lubricant will prevent environmental problems from arising.

The process according to the invention is advantageously characterized in that the epoxy compound is only partially cured, i.e. to such an extent that the reinforcing member is at least form-retaining and no longer tacky. Such a reinforcing element containing an only partially cured epoxy compound can effectively be provided with an adhesive to promote adhesion to the elastomeric matrix of a pneumatic tyre, for instance an adhesive based on resorcinol-formaldehyde-latex, a heat treatment being employed to cure the adhesive and the reinforcing member.

Alternatively, it may be of advantage according to the invention to make a reinforcing cord from two or more of the only partially cured, no longer tacky reinforcing elements. For, the only partially cured reinforcing members can be processed more easily into a cord on account of their greater flexibility. In principle, virtually all cord types commonly used for steel cord in the belt may be employed for cords built up from two or more of the reinforcing members according to the invention. According to the invention the cord built up from two or more reinforcing members according to the invention can, in principle, find especially advantageous application in the belt.

The epoxy resin used may be a resin of the novolak type or a resin based on the diglycidyl ether of Bisphenol A or on a tetrafunctional epoxy resin such as N,N,N′,N′-tetraglycidyl-4,4′-methylene dibenzene amine. Also, for the curing of the epoxy resin there should be added to the resin in a conventional manner an amine hardener, such as a cycloaliphatic amine, an aromatic amine, a polyamine, or a dicyanodiamine. In addition to the epoxy compounds and curing agents referred to here use may be made of other appropriate types of epoxy compounds and curing agents. Also, optionally, other conventional compounds may be added to the plastics matrix material, for instance fillers, pigments, or the like.

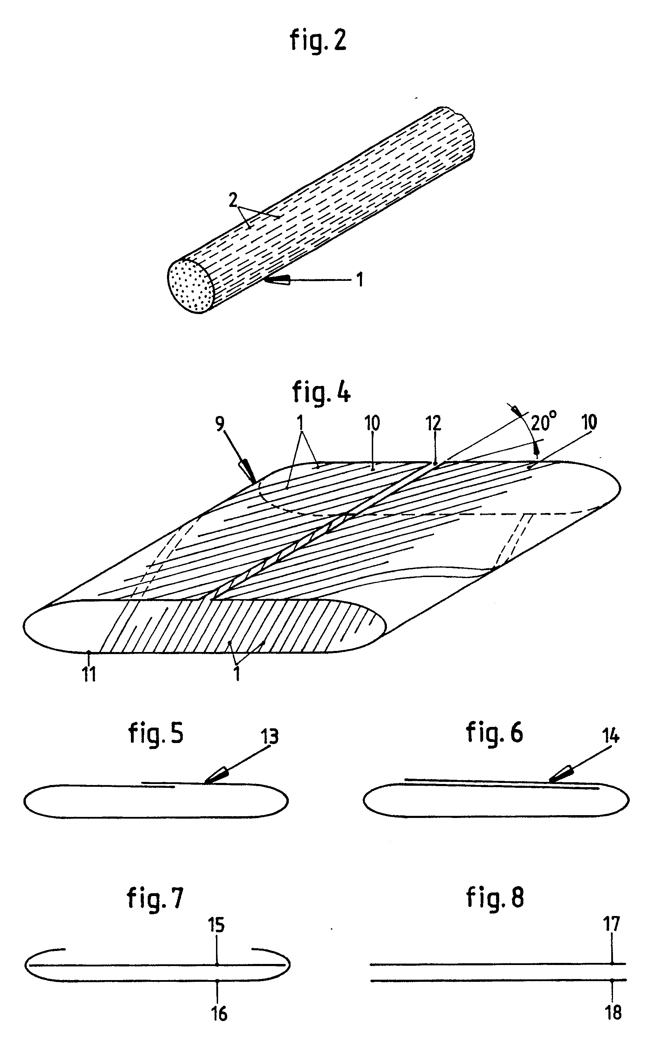

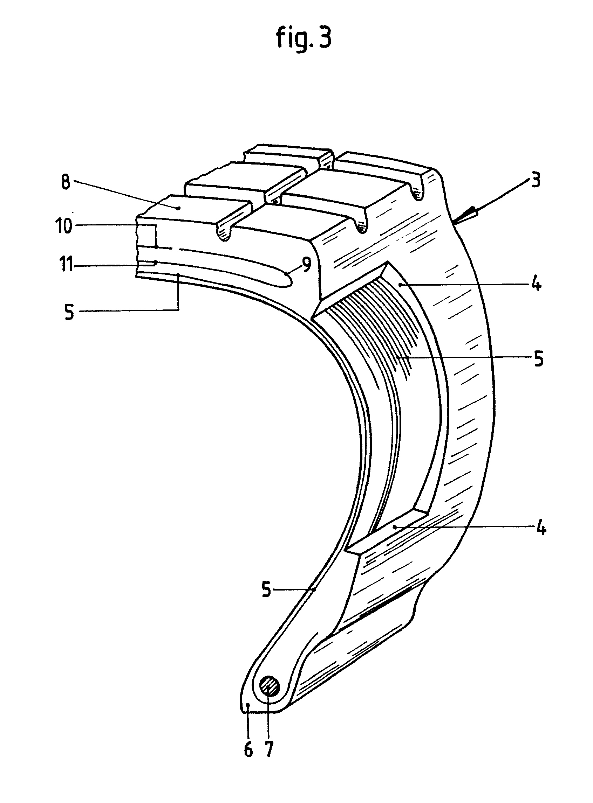

As was stated earlier, it has been found according to the invention that the apparent bending modulus according to the invention should be 1-25 PSN. The apparent bending modulus expressed in PSN mentioned in this application is measured using Taber V-5 Stiffness Tester Model 150 B and is based on ASTM D747-86 and derived from the apparent bending modulus defined therein. Said Taber V-5 Stiffness Tester Model 150 B is generally known and mentioned by name in BISFA 1981 Edition, Chapter H, pp. 36-37, and depicted in RUBBER AGE, October 1973, p. 50, Fig. 7. For clarity, the formula defining the apparent bending modulus is given below:

$E_b = (4S/wd^3) \times [(M \times \text{load scale reading})/100 \emptyset]$

wherein:

$E_b$ = apparent bending modulus, Pa,

S = span length, length measured from the axis of rotation of the pendulum and the specimen clamp to the contacting edge of the rollers, m,

w = specimen width, m,

d = specimen depth, m,

M = total bending moment value of the pendulum system, N.m, based on the moment of the pendulum arm, $a_1$, plus the moments indicated on the calibrated weight or weights, $a_2$, and

$\emptyset$ = reading on angular deflection scale converted to radians.

The moment of inertia I for the (rectangular) cross-section of the specimen is represented by this formula:

$I = w.d^3/12$

Replacing this moment of inertia with the symbol I and multiplying the two sides of the equation by I gives:

$E_b \times I = (S/3\emptyset) \times [(M \times \text{load scale reading})/100]$

Now, the validity of the formula is no longer restricted to specimens having a rectangular cross-section.

In addition, a scaling factor indicated with f is introduced which has the value 1 for the measuring range $10 \leq PSM \leq 100$ in the standard setting, to be further defined below, of the measuring apparatus, and the value 0,1 in the more sensitive setting for the measuring range $0 \leq PSN \leq 10$.

The aforementioned equation can be converted to:

"load scale reading" $\times f = (E_b \times I)/(S/3\emptyset) \times (M/100)$

The specimen for measuring the apparent bending modulus differs from the one described in Chapter 6 of ASTM D747-86 in that it is a piece of reinforcing member according to the invention of $70 \times 10^{-3}$m in length, whereas the effective length or span length at the standard setting of the measuring apparatus is $S = 52,5 \times 10^{-3}$m and at the more sensitive setting $S = 11 \times 10^{-3}$m.

The conditions and equations in Chapter 5 of ASTM D747-86 apply in full to the above-mentioned instrument and for measuring the apparent bending modulus, but additional conditions are needed for the calibration. For the standard setting the measuring apparatus is so equipped that the product of the maximum bending moment M and the span length S has the value $0,54 \times 10^{-3}$ Nm², which value is multiplied by the scaling factor f (= 0,1) in the more sensitive setting.

The apparent bending modulus expressed in PSN is defined as:

PSN = "load scale reading" $\times f$

when the angular deflection scale is at 15°. At the standard setting one part of scale of the load scale corresponds to the unit of PSN.

The measuring procedure for the apparent bending modulus deviates from that described in Chapter 8 of ASTM D747-86 in some particulars, and is therefore given below.

Connect the measuring apparatus to the mains supply and, using the motor control switch, align the zero mark of the angular deflection scale with that of the load scale. Remove the scale weights and compensator weights from the pendulum arm and set the span length at $52,5 \times 10^{-3}$m. In this way the standard setting of the instrument is effectuated. Next, the jaws of the specimen clamp are turned up against each other, such that they contact each other in the mathematical plane that contains the centre of rotation of the pendulum arm. If the mark of the pendulum arm is not at the 0 of the angular deflection and load scales, then the positioning screw in the right front leg of the instrument must be turned until it is. The result of a measurement using a rectangular calibration specimen of rectangular cross-section and known apparent bending stiffness must show whether the instrument is functioning properly. For this purpose place one end of the calibration specimen between the jaws of the specimen clamp and the other between the unit that in said Taber V-5 Stiffness Tester Model 150-B is in the form of rollers, and clamp it with the jaws, taking care that the specimen: at the jaws is positioned precisely on the centre of rotation of the pendulum arm, its longest side is perpendicular to the centre of rotation, and the end near the rollers rests against the stop. By turning its adjustment knob the left-hand roller is moved until it makes contact with but does not deflect the calibration specimen. The same process is carried out for the right-hand roller, whereupon the adjustment knobs of the left-hand and right-hand rollers are turned 1/4 turn in reverse. The motor, which sees to the angular deflection of the unit with its rollers, is started by moving the switch to the first angular deflection direction L and holding it there until the mark on the pendulum arm indicates 15° on the angular deflection scale. As soon as this is the case, the value on the load scale corresponding to this mark is read and noted down as $PSN_L$. Next, the switch is moved to the second angular deflection direction R and held there until the mark on the pendulum arm indicates 15° on the other side of the zero point on the angular deflection scale. As soon as this is so, the load scale is again read at the mark of the pendulum arm and the value is noted down as $PSN_R$. The calibration specimen is removed and the jaws of the specimen clamp again are so closed that they contact each other in the mathematical plane that contains the centre of rotation of the pendulum arm. The apparent bending modulus of the calibration specimen $PSN_y$ is the arithmatical average of $PSN_R$ and $PSN_L$. The instrument can be used when the difference between $PSN_y$ and the known apparent bending modulus of the calibration specimen expressed in PSN or, as in the case of the calibration specimen accompanying Taber V-5 Stiffness Tester Model 150B, in SU, is at most two parts of scale. If there is a greater difference, there will be machine malfunctions, which must first be corrected. After this process the calibration of the instrument must be checked, both in the standard and in the more sensitive setting. Such a check may be carried out by measuring the moment needed to keep the pendulum arm in the horizontal position. This moment, $M_a$, has to be equal to the above-mentioned value for M. When there is a deviation of more than 1%, the measuring result must be corrected by multiplication with the factor $M/M_a$.

Since the apparent bending modulus has to be measured on cured samples by definition, an approx. 1 m-long sample of the reinforcing member according to the invention is heated for 10 minutes at 230° C. Following cooling, six specimens of 0,070 m in length are cut from it. On each of these six specimens the apparent bending modulus is measured according to the same procedure as described for the calibration specimen. Care is taken when arranging the specimens that the longitudinal direction of the specimen is perpendicular to the centre of rotation of the pendulum arm, and the specimen, which may have a slight curvature, is fully disposed in a plane that contains said centre of rotation. If the cross-section of the reinforcing member is not circular but, say, flattened or elliptical, then it is clamped so that the largest dimension of the cross-section is approximately parallel to the centre of rotation of the pendulum arm. The arithmatical average of $PSN_R$ and $PSN_L$ is now called $PSN_i$, wherein i may be 1, 2, 3, 4, 5, or 6 and refers to the measurement's serial number. If, at the standard setting, the value measured on one or more of the specimens is below 10PSN, the measurements will be repeated using the more sensitive setting and the $PSN_i$ values so obtained taken to be the apparent bending modulus for the specimen in question. The apparent bending modulus of the specimen expressed in PSN is the arithmatical average of $PSN_1$, $PSN_2$, $PSN_3$, $PSN_4$, $PSN_5$, and $PSN_6$.

Further, it has been found according to the invention that the deformability F of the reinforcing member according to the invention is 2-10% when measured as prescribed by the cylinder test. Since by definition the deformability F must be measured on cured samples, an approx. 1-m long sample of the reinforcing member according to the invention is heated for 10 minutes at 230° C. In the cylinder test use is made of an apparatus with 50 concentric stepped stationary cylinder surfaces. The largest cylinder has a diameter of $D_{50}$ = 50 mm, the next one a diameter $D_{49}$ = 49 mm, the one next to that a diameter $D_{48}$ = 48 mm, and so on, the last cylinder having a diameter $D_1$ = 1 mm. A sample of said reinforcing member having a diameter of d mm and a length of 300 mm is first bent over the largest cylinder diameter $D_{50}$ in an arc of 180°, with the reinforcing member being pulled tight just sufficiently by hand to fit against the smooth cylinder surface through the full 180° angle. The same sample is then bent over the next largest cylinder, the one with diameter $D_{49}$. It is then bent over the cylinder with diameter $D_{48}$, etc. This process of successively bending the sample over a next cylinder with a smaller diameter is continued until on a certain cylinder, say $D_5$ having a diameter of 5 mm, an irregularity is spotted in the appearance of the reinforcing member. If said irregularity did not yet occur on the preceding cylinder $D_6$ having a diameter of 6 mm, then the deformability F is defined as

$$F = \frac{d}{D_6} \, 100\%$$

If, in this last-mentioned case, the reinforcing member were to have a diameter d = 0,3 mm, then the deformability would be

$$F = \frac{0,3 \ (mm)}{6 \ (mm)} \ . \ 100\% = 5\%$$

In general, the deformability F in the described cylinder test is thus determined on the basis of the average of 10 measurements of F. In other words, in general $F = \frac{d}{D} \, . \, 100\%$ wherein d is the diameter in mm of the reinforcing member and D is the diameter in mm of the smallest cylinder on which no signs of visible impairment or external irregularities can yet be detected on the reinforcing member bent over it through an angle of 180°. Said irregularities in the appearance of the reinforcing member may be of several types, e.g. loss of cohesion of the reinforcing member, with a greater or smaller portion of the PPDT filaments breaking loose from the plastics matrix, buckling of the reinforcing member, changes in the shape of the cross-section of the reinforcing member, fracture(s) in the outside fibre of the reinforcing member, and the like. It should be noted that in a reinforcing member according to the invention having a non-circular cross-section, say a flattened or elliptical cross-section, in the formula

$$F = \frac{d}{D} \cdot 100\%$$

d should represent the smallest width of the cross-section in radial direction of the cylinders having a diameter D. In the case of flattened or elliptical cross-sections the reinforcing element should be placed against the cylinder surface with its "wide side."

The invention will be further illustrated with reference to the schematic drawings.

Fig. 1 shows a graph in which the aforementioned apparent bending modulus and the deformability F have been plotted, the former in PSN.

Fig. 2 is a perspectival view of the reinforcing member according to the invention.

Fig. 3 is a cut-away view in perspective of a section of a radial-ply tyre.

Fig. 4 is a perspectival view of a belt strip with folded over longitudinal edges and no overlap.

Figs. 5 and 6 are views of belt strips with folded over edges and a small and a large overlap, respectively.

Figs. 7 and 8 illustrate some alternative belt constructions.

The reinforcing member drawn on a greatly enlarged scale in Fig. 2 is indicated in its entirety with 1 and is built up from a large number, say 500, of continuous filaments 2 of PPDT, only a limited number of which has been indicated with dashed lines in Fig. 2. The filaments 2, each having a diameter of, say, 12 $\mu$m, are disposed in an epoxy resin matrix not provided with a reference numeral. In actual fact such a reinforcing member will have a cylindrical outer surface with a diameter of, say, 0,34 mm.

Fig. 3 is a view in perspective of a section of a cut-away radial-ply tyre 3 for a passenger car. The tyre 3 is composed of a matrix 4 of elastomeric material, more particularly rubber. The elastomeric matrix 4 is reinforced in the first place with a carcass 5 consisting of a single layer formed by a fabric of which the warp is preferably constituted by the reinforcing members according to the invention. The carcass fabric is arranged in the tyre 3 in such a way that the warp members extend in radial planes of the tyre. The carcass fabric 5 extends through the entire tyre from its one beaded edge 6 to the other one (not shown). In each beaded edge the carcass fabric 5 is laid around the steel beaded rope 7. Between the tread 8 of the tyre 3 and the carcass 5 is arranged an envelope-shaped belt strip 9 with folded-over longitudinal edges. The belt strip 9 depicted separately in perspective in Fig. 4 consists of a fabric of which the warp is formed by the reinforcing members 1 according to the invention and the weft of light-weight spun yarns having a pick density of about 1 thread per cm. The weft has a subordinate function and, essentially, serves only to hold the warp formed by the reinforcing members 1 together in the shape of a fabric. As appears from Fig. 4, the belt strip 9 is positioned in the tyre 3 in such a way that the reinforcing members 1 make an angle of 20° with the direction of the peripheral velocity of the tyre 3. The construction of the belt of the radial-ply tyre according to the invention drawn in Fig. 3 is particularly simple, since for reinforcement there is only present the envelope 9 produced by folding over the longitudinal edges of a flat strip of fabric. According to the construction of Fig. 4 the belt strip is folded over so far that the two folded-over edge strips 10 cover the underlying layer 11 over most of its width. Fig. 4 shows the envelope-shaped belt strip 9 in the position in which it is present in the tyre 3, viz. the side of the envelope 9 with the slit 11 is nearest to the tread 8 of the tyre.

Shown in Fig. 5 is another embodiment of the belt, in which the folded-over edges of the envelope-shaped belt strip 13 overlap over a relatively small distance. Fig. 6 shows an embodiment of the belt in which the folded-over edges of the again envelope-shaped belt strip 14 have a comparatively widely spaced overlap. The belt strips 13 and 14 are both substantially made up of the reinforcing members 1 according to the invention.

In Fig. 7 yet another construction of the belt is shown, consisting of a flat belt strip 15 enclosed by a second belt strip 16 with edges providing only a little overlap in folded-over position. The two belt strips 15 and 16 are substantially composed of the reinforcing members 1 according to the invention, with the reinforcing members from the strips 15 and 16 crossing each other in the aforementioned manner.

Fig. 8 is a representation of a belt built up from two flat belt strips 17 and 18 substantially composed of the reinforcing members 1 according to the invention, with the reinforcing members from the strips 17 and 18 crossing each other in a conventional manner as described hereinbefore.

Of course, it is possible in principle according to the invention to make use of other belt constructions in addition to those illustrated.

### Example

In an embodiment according to the invention the reinforcing members were each manufactured from a bundle of 250 PPDT filaments having an overall linear density of 840 decitex. The filaments each had a diameter of 17 $\mu$m, and the yarn or the filaments bundle had a tensile strength of 165 N, a modulus of elasticity of 80 GPa, and an elongation at rupture of 3,8%. Notably, such a filaments bundle can be manufactured in the manner described in EP 0 168 879 B1. The untwisted bundle of 250 filaments was impregnated with the aforementioned liquid mixture. To the impregnated filaments bundle was then imparted the desired final diameter of the reinforcing member, whereupon the whole was cured. The resulting reinforcing member had an outer diameter of 0,34 mm. The reinforcing member was cured only in part so as to give a resin just hard enough not to be tacky. The reinforcing member was then wound onto a spool having a core diameter of 500 mm. While use was made of a yarn having a modulus of elasticity of 80 GPa, as was stated hereinbefore, optionally a PPDT feed yarn having a higher modulus of elasticity, say of 120 GPa, may be employed. Alternatively, feed yarns of more than 250 filaments can be utilized. The resulting reinforcing members according to the invention, formed into a cord or not, can be made into a fabric of the appropriate conventional type for use in the belt or the carcass of a car tyre, the reinforcing member according to the invention forming the warp.

A random 2-metre long section of the wound reinforcing member was subjected to a heat treatment at 230°C for 10 minutes, in which process it was cured completely. Measuring the apparent bending modulus of the cured reinforcing element in the manner defined resulted in a value of 5 PSN being found. Also measured was the deformability F in conformity with the described cylinder test, in which process a value of 7% was measured.

The partially cured reinforcing member, which was processed into a cord or a fabric or not, was then provided in a manner common to the art with an adhesive in the form of a resorcinol-formaldehyde latex (RFL) dip to further improve its adhesion to the elastomeric matrix of a car tyre. To this end the partially cured reinforcing member according to the invention was introduced into a bath of RFL dip at a tension of 25 mN/tex and then heated at 230°C for 90 seconds under that same tension. The RFL dip contained 20% by weight of solids and was obtained by first mixing 30,6 parts of precondensed resorcinol-formaldehyde resin (75%), 12,0 parts of caustic soda (5%), 20,8 parts of formaline (37%), and 368,0 parts of water and adding the whole to a mixture of 415,4 parts of vinyl pyridine latex (40%), 25,0 parts of ammonia (25%), and 128,2 parts of water. All parts are parts by weight. Upon completing the RFL dip treatment the reinforcing member according to the invention was fully cured and provided with the adhesive on the outside.

Said modulus of elasticity and elongation at break of the synthetic material formed by a cured epoxy compound were determined in accordance with ASTM-D638. The strength, elongation, and modulus of elasticity of the PPDT filaments bundle were determined in accordance with ASTM-D885.

Said glass-rubber transition temperature $T_g$ of the reinforcing member according to the invention is determined using a mechanical dynamic analysis apparatus capable of imposing sinusoidal torque deformation, such as Rheometrics's RDA-700 type. Measured is the loss angle delta, which is to be found between the imposed sinusoidal deformation and the resulting moment. The measurements are to be performed at a frequency of 10 rad/s, a shear amplitude of 0,1-0,2%, and a heating rate of 2°-4°C/min in a nitrogen atmosphere. Reliable measurements are obtained by clamping the reinforcing member on either end between two clamping faces each provided with a v-groove having an apex angle of 90°, so that each clamping face will have line contact with the reinforcing member according to the invention in two places.

$T_g$ is defined as the temperature at which the tangent delta curve is at its maximum.

Within the scope of the invention various changes can be made. Although the invention is directed firstly to reinforcing members of circular cross-section, it is in principle also possible to employ various other non-circular cross-sections, such as a triangular, rectangular, hexagonal or other polygonal cross-section, or a flattened or elliptical one. In manufacturing the reinforcing member according to the invention use is made in the impregnating process of an untwisted and untangled bundle of PPDT filaments. However, it is also possible in principle to manufacture the reinforcing member according to the invention by making use of slightly tangled PPDT filaments bundle in said impregnating process.

## Claims

1. A reinforcing member for a pneumatic radial-ply tyre, which member comprises a filaments bundle composed of continuous filaments of polyparaphenylene terephthalamide (PPDT) and impregnated with a synthetic material substantially made up of a cured epoxy compound in an amount of at least 15 wt.%, calculated on the weight of the non-impregnated material, characterized in that the linear density of the filaments bundle is 300-2000 decitex, preferably 300-1400 decitex, calculated on the non-impregnated material, and the amount of synthetic material is 20-50 wt.%, calculated on the weight of the non-impregnated material.

2. A reinforcing member according to claim 1, characterized in that said filaments bundle contains at most 1000 PPDT filaments, preferably 100-800 filaments.

3. A reinforcing member according to claim 1, characterized in that the apparent bending modulus of the reinforcing member has a value of 1-25 PSN and the deformability F of the reinforcing member is 2-10%, preferably 4-10%.

4. A reinforcing member according to claim 1, characterized in that it is provided with an adhesive known in itself to promote adhesion to the elastomeric matrix of the pneumatic tyre, for instance an adhesive based on resorcinol-formaldehyde-latex.

5. A reinforcing member according to claim 1, characterized in that the amount of synthetic material is 36-45 wt.%, preferably about 40 wt.%, calculated on the weight of the non-impregnated material.

6. A reinforcing member according to claim 1, characterized in that the modulus of elasticity of the synthetic material based on a cured epoxy compound is at least 1 GPa, preferably 1-10 GPa.

7. A reinforcing member according to claim 1, characterized in that the elongation at break of the synthetic material based on a cured epoxy compound is greater than 2%, preferably greater than 4%.

8. A reinforcing member according to claim 7, characterized in that the elongation at break of the synthetic material is at most 10%.

9. A reinforcing member according to claim 1, characterized in that the glass-rubber transition temperature $T_g$ of the reinforcing member is higher than 120°C.

10. A reinforcing member according to claim 1, characterized in that the filaments bundle has a tensile strength of 2-4 GPa, a modulus of elasticity of 50-150 GPa, and an elongation at break of 1-6%.

11. A reinforcing member according to claim 1, characterized in that the filaments bundle in the reinforcing member is untwisted and the filaments extend substantially linearly and mutually parallel.

12. A cord, characterized in that it is made up of two or more of the reinforcing members according to claim 1.

13. A radial-ply tyre with at least one belt strip containing reinforcing members, which members each contain a bundle of continuous PPDT filaments, the bundles being impregnated with a synthetic material substantially made up of a cured epoxy compound in an amount of at least 15 wt.%, calculated on the weight of the non-impregnated material, characterized in that the reinforcing members are of the type where the linear density of the filaments bundle is 300-2000 decitex, preferably 300-1400 decitex, calculated on the non-impregnated material, and the amount of synthetic material is 20-50 wt.%, preferably 36-45 wt.%, calculated on the weight of the non-impregnated material.

14. A radial-ply tyre according to claim 13, characterized in that the filaments bundle in a reinforcing member contains at most 1000 filaments, preferably 100-800 filaments.

15. A radial-ply tyre according to claim 13, characterized in that the apparent bending modulus of the reinforcing members is 1-25 PSN and their deformability F 2-10%, preferably 4-10%.

16. A radial-ply tyre according to claim 13, characterized in that the reinforcing members are provided with an adhesive known in itself to promote adhesion to the elastomeric matrix of the pneumatic tyre, for instance an adhesive based on resorcinol-formaldehyde-latex.

17. A radial-ply tyre according to claim 13, characterized in that the elongation at break of the synthetic material based on a cured epoxy compound is greater than 2%, preferably greater than 4%, the glass-rubber transition temperature $T_g$ of the reinforcing member is higher than 120°C, and the modulus of elasticity of the synthetic material is at least 1 GPa, preferably 1-10 GPa.

18. A radial-ply tyre according to claim 13, characterized in that the reinforcing members are arranged in the belt strip in the form of cords, each cord being made up of two or more of said reinforcing members.

19. A radial-ply tyre according to claim 13, characterized in that the belt strip is folded over along its longitudinal edges.

20. A radial-ply tyre, characterized in that the carcass, which is preferably made up of a single layer, is substantially composed of reinforcing members, which members each contain a bundle of continuous PPDT filaments, the bundles being impregnated with a synthetic material substantially made up of a cured epoxy compound in an amount of 20-50 wt.%, preferably 36-45 wt.%, calculated on the weight of the non-impregnated material, and the reinforcing members are of the type where the linear density of the filaments bundle is 300-2000 decitex, calculated on the weight of the non-impregnated material.

21. A radial-ply tyre according to claim 20, characterized in that the filaments bundle in a reinforcing member contains at most 1000 filaments, preferably 100-800 filaments.

22. A radial-ply tyre according to claim 20, characterized in that the apparent bending modulus of the reinforcing members is 1-25 PSN and their deformability F 2-10%, preferably 4-10%.

23. A radial-ply tyre according to claim 20, characterized in that the reinforcing members are provided with an adhesive known in itself to promote adhesion to the elastomeric matrix of the pneumatic tyre, for instance an adhesive based on resorcinol-formaldehyde-latex.

24. A radial-ply tyre according to claim 20, characterized in that the elongation at break of the synthetic material based on a cured epoxy compound is greater than 2%, preferably greater than 4%, the glass-rubber transition temperature $T_g$ of the reinforcing member is higher than 120°C, and the modulus of elasticity of the synthetic material is at least 1 GPa, preferably 1-10 GPa.

25. A radial-ply tyre according to claim 20 for a passenger car, characterized in that said reinforcing members are provided in the carcass singly, i.e. not in the form of a cord.

26. A radial-ply tyre according to claim 20 for a truck, characterized in that the reinforcing members are provided in the carcass in the form of cords, each cord being made up of two or more of said reinforcing members.

27. A radial-ply tyre, characterized in that the carcass and at least one belt strip are substantially built up from the reinforcing member according to claim 1.

28. A process for manufacturing a reinforcing member according to claim 1, characterized in that in a continuous process a PPDT filaments bundle is moved along at a rate of at least 80 m/min, preferably of 80-500 m/min, with the bundle being impregnated with the desired amount of a liquid mixture of an epoxy resin and a curing agent in a first step, the impregnated bundle being shaped as desired in a second step, followed by the mixture being cured in a third step, and a lubricant, more particularly an appropriate water-based lubricant for the adhesive to be applied later on, being applied to the member in the fourth step.

29. A process according to claim 28, characterized in that the epoxy compound is only partially cured, i.e. to such an extent that the reinforcing member is at least form-retaining and no longer tacky.

30. A process according to claim 29, characterized in that the reinforcing member containing an only partially cured epoxy compound is provided with an adhesive to promote adhesion to the elastomeric matrix of a pneumatic tyre, for instance an adhesive based on resorcinol-formaldehyde-latex, and a heat treatment is employed to cure the adhesive and the reinforcing member.

fig.1

## fig. 2

## fig. 4

## fig. 5

## fig. 6

## fig. 7

## fig. 8

fig.3

European
Patent Office

EUROPEAN SEARCH
REPORT

Application Number

EP 90 20 2512

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,A | FR-A-2 576 044   (BRIDGESTONE CORPORATION) <br> * page 1, line 30 - page 2, line 8 * * page 7, lines 4 - 14 * * abstract * | 1,4 | B 60 C 9/00 <br> B 60 C 9/20 |
| D,Y | US-A-4 320 791   (KATSUHIKO FUJII ET AL.) <br> * abstract * * column 2, lines 30 - 31 * * column 3, lines 3 - 16 * | 1 | |
| A | FR-A-2 590 207   (BRIDGESTONE CORPORATION) <br> * page 6, lines 2 - 15 * | 1,4 | |
| A | Chemiefasern/Textil-industrie vol. 24, no. 2, February 1984, Frankfurt,DE pages 97 - 101; Dr. J.W. Rothuizen: "Kevlar - eine neue Generation von Verstärkungsfasern für Reifen und andere Gummierzeugnisse" <br> * page 100, paragraph 2 * | 1,4 | |
| A | Gummi, Astbest, Kunststoffe vol. 29, no. 1, January 1976, Stuttgart, DE pages 27 - 33; Dr. J.W. Rothuizen: "Die Zukunft der Textilverstärkung in der Gummiindustrie" <br> * page 32, paragraph 2 * | 1,4,13,16 | |
| A | EP-A-0 270 478   (APSLEY METALS LTD.) <br> * column 2, lines 12 - 16; figures * | 4,13,16, 19 | TECHNICAL FIELDS SEARCHED (Int. Cl.5) <br><br> B 60 C <br> C 08 J |

The present search report has been drawn up for all claims

| Place of search | Date of completion of search | Examiner |
|---|---|---|
| The Hague | 29 November 90 | REEDIJK A.M.E. |